(19) Europäisches Patentamt
European Patent Office
Office européen des brevets

(11) Veröffentlichungsnummer: **0 369 229 A2**

(12) **EUROPÄISCHE PATENTANMELDUNG**

(21) Anmeldenummer: **89120048.7**

(22) Anmeldetag: **28.10.89**

(51) Int. Cl.5: **C08G 18/16, C07F 9/6584, //(C08G18/16,101:00)**

(30) Priorität: **10.11.88 DE 3838128**

(43) Veröffentlichungstag der Anmeldung: **23.05.90 Patentblatt 90/21**

(84) Benannte Vertragsstaaten: **BE DE ES FR GB IT NL SE**

(71) Anmelder: **BAYER AG**
**D-5090 Leverkusen 1 Bayerwerk(DE)**

(72) Erfinder: **Ruckes, Andreas, Dr.**
**Herderstrasse 13**
**D-5090 Leverkusen 3(DE)**
Erfinder: **Brock, Martin, Dr.**
**Silesiusstrasse 82**
**D-5000 Köln 80(DE)**
Erfinder: **Weider, Richard, Dr.**
**Quettinger Strasse 78**
**D-5090 Leverkusen 3(DE)**

(54) **Verfahren zur Herstellung von Kunststoffen nach dem Polyisocyanatpolyadditionsverfahren sowie dafür geeignete Katalysatoren.**

(57) Die vorliegende Erfindung betrifft ein Verfahren zur Herstellung von Kunststoffen unter Verwendung von substituierten Triamino(imino)phosphoranen als Katalysatoren. Sie können als Ersatz oder in Kombination mit an sich bekannten urethankatalystoren z.B. zur Herstellung von starren oder flexiblen polyurethanschäumen sowie zahlreichen anderen polyurethan-Produkten eingesetzt werden. Die Erfindung betrifft weiterhin neue Triamino-(amino)phosphorane.

EP 0 369 229 A2

## Verfahren zur Herstellung von Kunststoffen nach dem Polyisocyanatpolyadditionsverfahren sowie dafür geeignete Katalysatoren

Die Erfindung betrifft ein Verfahren zur Herstellung von Kunststoffen unter Verwendung von substituierten Triamino(imino)phosphoranen als Katalysatoren. Sie können als Ersatz oder in Kombination mit an sich bekannten Urethankatalysatoren z.B. zur Herstellung von starren oder flexiblen Polyurethanschäumen sowie zahlreichen anderen Polyurethan-Produkten eingesetzt werden. Unter dem obengenannten Begriff "Polyurethan-Produkte" sollen im folgenden alle Umsetzungsprodukte von Polyisocyanaten mit Verbindungen mit mindestens 2 gegenüber Isocyanaten reaktionsfahigen Wasserstoffatomen gemeint sein, d.h. unter dem hier verwendeten Begriff Polyurethan sind beispielsweise reine Polyurethane, Polyurethan-Polyharnstoffe oder reine Polyharnstoffe zu verstehen.

Die Geschwindigkeit der Reaktion zwischen Isocyanat-Gruppen und Verbindungen mit gegenüber NCO-Gruppen reaktionsfahigen Wasserstoffatomen wird außer von der Temperatur der Ausgangsprodukte und ihrer Struktur vor allem durch geeignete Katalysatoren beeinflußt. In der Praxis werden als nucleophile Katalysatoren hauptsächlich Basen (z.B. tertiäre Amine wie Triethylamin) und als elektrophile Katalysatoren organische Metallverbindungen (z.B. Sn-Carboxylate wie Sn(III)-octoat) eingesetzt. Stand der Technik ist die gemeinsame Verwendung von Lewis-Säuren und Lewis-Basen, die üblicherweise durch synergistische Effekte gekennzeichnet ist. Es ist jedoch auch bekannt, daß in einer Vielzahl von Anwendungen ausschließlich Amine als Katalysatoren eingesetzt werden.

Von der großen Anzahl bekannter Amin-Katalysatoren (vgl. Kunststoffhandbuch, Band VII, Polyurethane, Hansen-Verlag, München 1983, Seiten 92 - 98) haben bisher jedoch nur relativ wenige auf breiter Basis Eingang in die Technik gewonnen, wie z,B. 1,4-Diazabicyclo[2.2.2]octan (DABCO), Bis-(2-dimethylaminoethyl)ether, Triethylamin, Dimethylcyclohexylamin, Dimethylethanolamin, Dimethylbenzylamin, Methylmorpholin, Ethylmorpholin, um die wichtigsten zu nennen. Insbesondere werden naturgemäß solche Katalysatoren verwendet, die sich durch hohe Aktivität, wirtschaftliche Herstellbarkeit sowie breite Anwendbarkeit auszeichnen. Ein weiterer ständig an Bedeutung zunehmender Aspekt ist die Bewertung der Katalysatoren unter toxikologischen Gesichtspunkten hinsichtlich Verarbeitungssicherheit und Geruchsbelästigung. Viele der heute verwendeten Amin-Katalysatoren, wie z.B. DABCO oder Triethylamin, sind aus dieser Sicht aufgrund ihrer hohen Flüchtigkeit und ihres relativ intensiven Amingeruchs, welcher in das endgültige, damit hergestellte Produkt übertragen wird, als unbefriedigend zu bezeichnen. Aufgrund der Vielzahl von Anwendungsmöglichkeiten von Polyurethan-Kunststoffen ist es ebenso wünschenswert, den jeweiligen Bedürfnissen angepaßte, d.h. "maßgeschneiderte" Katalysatoren zur Verfügung zu stellen. Eine Möglichkeit ist die chemische Modifizierung eines Katalysator-Typs, um dessen Aktivitat auf den jeweiligen Verwendungszweck abzustimmen.

Eine weitere Verbindungsklasse von basischen Polyurethan-Katalysatoren sind die in der DE-OS 1 745 418 beschriebenen bicyclischen Amidine, die eine den bisher stärksten bekannten Amin-Basen vergleichbare Aktivität aufweisen und auch einen wesentlich geringeren Eigengeruch aufweisen. Ein gravierender Nachteil dieser Verbindungen, der ihre Anwendung bisher einschränkt, ist jedoch ihre geringe Hydrolysebeständigkeit, die aufgrund der häufigen Verwendung von Wasser als Treibmittel oder Kettenverlängerer in Polyurethan-Systgemen einen Einsatz weitgehend ausschließt, da die entsprechenden Formulierungen nicht lagerstabil sind.

Überraschenderweise wurde nun gefunden, daß bestimmte Triamino(imino)phosphorane mit Vorteil als Katalysatoren zur Herstellung von Polyurethanen und auch Polyepoxidharzen verwendet werden können.

Die erfindungsgemäß einzusetzenden Verbindungen sind sehr hydrolysestabil und zeigen deshalb keinerlei Empfindlichkeit gegenüber Luftfeuchtigkeit oder Wasser. Darüber hinaus zeigen sie im Vergleich zu den oben erwähnten bicyclischen Amidinbasen eine noch höhere Aktivität. Ein anderer willkommener Effekt ist bei den erfindungsgemäß vorgeschlagenen Katalysatoren darin zu sehen, daß sich durch Wahl geeigneter Substituenten am Stickstoff die Aktivität der Produkte - z.B. im Gegensatz DABCO, das unter wirtschaftlich vertretbaren Aspekten keine Variation erlaubt -, maßgeschneidert einstellen läßt. Vorteilhaft ist weiterhin der geringe Eigengeruch sowie die geringe Flüchtigkeit der Verbindungen, die zu einer deutlich verminderten Geruchsbelästigung bei der Herstellung von Polyurethan-Produkten führt.

Zusätzlich können weitere Vorteile beobachtet werden, wie z.B. leichte Handhabung, da die bevorzugt eingesetzten Triamino(imino)phosphorane flüssig sind, einen guten Härtungsverlauf sowie nicht zuletzt die teilweise sehr einfache Herstellung der Verbindungen.

Gegenstand der vorliegenden Erfindung ist somit ein Verfahren zur Herstellung von Kunststoffen unter Verwendung von substituierten Triamino(imino)phosphoranen der allgemeinen Formeln I, II oder III

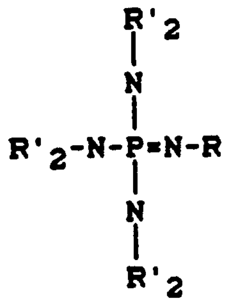

I

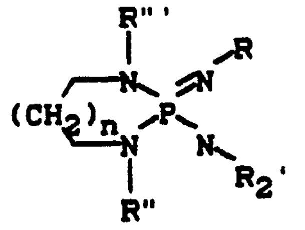

II

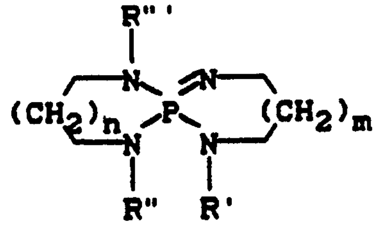

III

worin die Gruppen

R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Arylgruppen oder Alkylarylgruppen,

R′ lineare oder verzweigte Alkylgruppen mit 1 bis 8 Kohlenstoffatomen Cycloalkyl- oder Alkylcycloalkylgruppen mit 5 bis 9 Kohlenstoffatomen, Cycloalkylengruppen mit 4 bis 6 Kohlenstoffatomen,

R″ Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Arylgruppen oder Alkylarylgruppen,

R‴ lineare oder verzweigte Alkylgruppen mit 1 bis 8 Kohlenstoffatomen, Cycloalkyl- oder Alkylcycloalkylgruppen mit 5 bis 9 Kohlenstoffatomen, Arylgruppen oder Alkylarylgruppen bedeuten - und

die ganzen Zahlen n und m gleich oder verschieden sind und für 0 bis 2 stehen,

als Katalysatoren.

Bevorzugte Katalysatoren sind:

N,N′,N″-Hexamethyltriamino(methylimino)phosphoran

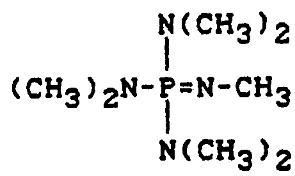

N,N′,N″-Hexaethyltriamino(methylimino)phosphoran

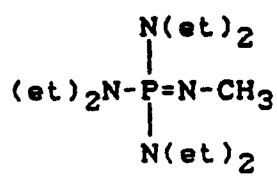

N,N′,N″-Hexamethyltriamino(t-butylimino)phosphoran,

2-t-Butylimino-2-diethylamino-1-methyl-perhydro-1,3,2-diazaphosphorin

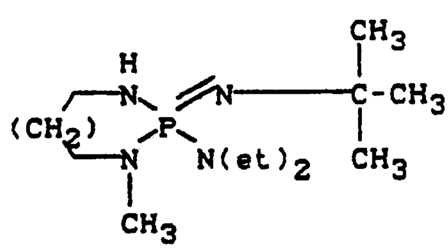

2-t-Butylimino-2-diethylamino-1,3-dimethyl-perhydro-1,3,2-diazaphosphorin,

7-Ethyl-5,11-dimethyl-1,5,7,11-tetraza-6-phosphaspiro[5.5]undec-1(6)-en

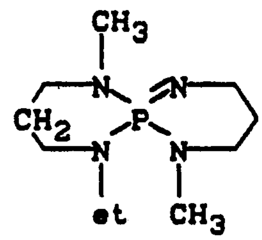

Gegenstand der Erfindung sind auch Verbindungen der allgemeinen Formel (I), worin die Gruppen R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen und
$R'$ lineare oder verzweigte Alkylgruppen mit 2 bis 8 Kohlenstoffatomen, Cycloalkyl- oder Alkylcycloalkylgruppen mit 5 bis 9 Kohlenstoffatomen oder Cycloalkylengruppen mit 4 bis 6 Kohlenstoffatomen bedeuten.

Verbindungen der allgemeinen Formel (II), worin die Gruppen
R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
$R'$ lineare oder verzweigte Alkylgruppen mit 1 bis 8 Kohlenstoffatomen, Cycloalkyl- oder Alkylcycloalkylgruppen mit 5 bis 9 Kohlenstoffatomen oder Cycloalkylengruppen mit 4 bis 6 Kohlenstoffatomen,
$R''$ lineare oder verzweigte Alkylgruppen mit 1 bis 8 C-Atomen, Cycloalkyl- oder Alkylcycloalkylgruppen, mit 5-9 C-Atomen, Aryl- oder Alkylarylgruppen oder Wasserstoff,
$R'''$ lineare oder verzweigte Alkylgruppen mit 2 bis 8 Kohlenstoffatomen, Cycloalkyl- oder Alkylcycloalkylgruppen, Aryl- oder Alkylarylgruppen bedeuten und
n eine ganze Zahl zwischen 0 und 2 bedeutet.

Verbindungen der allgemeinen Formel (II), worin die Gruppen
R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
$R'$ eine Methylgruppe oder verzweigte Alkylgruppen mit 3 bis 8 Kohlenstoffatomen, Cycloalkyl- oder Alkylcycloalkylgruppen mit 5 bis 9 Kohlenstoffatomen oder Cycloalkylengruppen mit 4 bis 6 Kohlenstoffatomen,
$R''$ Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
$R'''$ lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl-oder Alkylarylgruppen bedeuten und
n eine ganze Zahl von 0 bis 2 bedeutet sowie
Verbindungen der allgemeinen Formel (III), worin die Gruppen
R Wasserstoff, lineare oder verzweigte Alkylgruppen mit 2 bis 8 Kohlenstoffatomen, Cycloalkyl- oder Alkylcycloalkylgruppen mit 5 bis 9 Kohlenstoffatomen, Aryl- oder Alkylarylgruppen,
$R'$ lineare oder verzweigte Alkylgruppen mit 1 bis 8 Kohlenstoffatomen, Cycloalkyl- oder Alkylcycloalkylgruppen mit 5 bis 9 Kohlenstoffatomen oder Cycloalkylengruppen mit 4 bis 6 Kohlenstoffatomen,
$R''$ Wasserstoff, lineare oder verzweigte Alkylgruppen mit 1 bis 8 C-Atomen, Cycloalkyl- oder Alkylcycloalkylgruppen mit 5 bis 9 C-Atomen, Aryl- oder Alkarylgruppen,
$R'''$ Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkarylgruppen bedeuten und
die ganzen Zahlen n und m gleich oder verschieden sind und für 0 bis 2 stehen.

Die Herstellung der Triamino-iminophosphorane der allgemeinen Formeln (I) bis (III) erfolgt nach an sich bekannten Syntheseverfahren.

Verbindungen der allgemeinen Formel (I) können z.B. durch Umsetzung von Phosphorigsäuretriamiden, hergestellt aus Phosphortrichlorid und sekundären Aminen, mit N-substituierten Chloraminen oder Alkylaziden unter Abspaltung von Chlorwasserstoff bzw, Stickstoff gemäß der Gleichung

$$(R'_2N)_3P + Y\text{-}N\text{-}R \xrightarrow[-Y]{} I$$

$$\text{mit } Y = HCl,\ N_2$$

[siehe K. Issleib, M. Lischewski, Synth. Inorg. Met. Org. Chem. 3 (1973) 255; P. Haasemann, 3. Goubeau, Z. anorg. allg. Chem. 408 (1974) 293] oder durch Behandlung von Triaminohalogen-phosphoniumhalogeniden,

hergestellt durch Halogenierung der obengenannten Phosphorigsäuretriamiden, mit primären Aminen oder Ammoniak gemäß der Gleichung

$$(R'_2N)_3PX^+\ X^- + H_2NR \xrightarrow[-2HX]{} I$$

mit X = Halogen

(siehe G.N. Koidan et al., Zh. Obsh. Khim. 52 (1982) 2001) erhalten werden.

Verbindungen der allgemeinen Formel II können in einer mehrstufigen Synthese (siehe R. Schwesinger, Chimia 39 (1985) 269) aus N-substituierten Imino-phosphortrichlo riden durch Behandlung mit einem sekundären Amin und anschließender Umsetzung mit einem N-monosubstituierten α,ω-Diaminoalkan gemäß der Gleichung

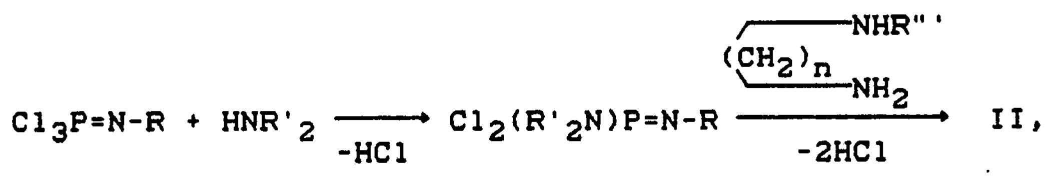


R" = H

hergestellt werden. Die so erhaltenen Verbindungen (R″ = H) können gegebenenfalls mit geeigneten Alkylierungsmitteln in die Verbindungen der Formel II mit R″ = H überführt werden.

Verbindungen der allgemeinen Formel III können nach einem ebenfalls von Schwesinger beschriebenen, mehrstufigen Verfahren aus Phosphorpentachlorid und N-monosubstituierten α,ω-Diaminoalkanen gemäß der Gleichung

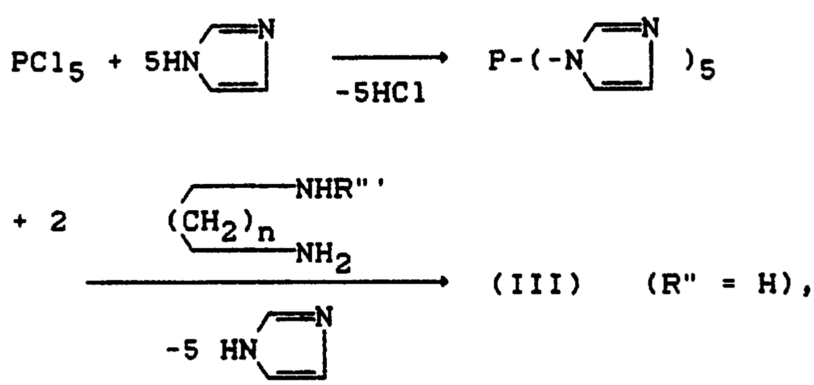


hergestellt werden, Die so erhaltenen Verbindungen der Formel III (R″ = H) können gegebenenfalls mit geeigneten Alkylierungsmitteln in die Verbindungen der Formel III mit R″ = H überführt werden, wobei zur Verbesserung der Ausbeute bei der Monoalkylierung eine reversible Blockierung eines der beiden reaktiven Stickstoffatome mit einer geeigneten Schutzgruppe erforderlich sein kann. Die Schutzgruppe wird nach erfolgter Alkylierung des zweiten reaktiven Stickstoffatoms nach üblichen Verfahren wieder entfernt.

Die beschriebenen-Verfahren zur Herstellung der Triamino-iminophosphorane nach den allgemeinen Formeln I bis III erlauben die Synthese einer Vielfalt bisher unbekannter Stoffe.

Durch die Wahl verschiedener Amine und durch Abwandlung des Substituenten R″ ist es möglich, die Eigenschaften der Triamino-imino-phosphorane dem beabsichtigten Verwendungszweck anzupassen.

Die neuen erfindungsgemäßen Katalysatoren sind farblose Verbindungen, wobei die bevorzugten Typen flüssig sind. Sie sind löslich in organischen Lösungsmitteln und löslich oder dispergierbar in Wasser. Die Menge an diesen Verbindungen, welche als Katalysatoren verwendet werden, beträgt im allgemeinen zwischen 0,01 und 5 Gew,-%, bezogen auf die Verbindung mit den aktiven Wasserstoffatomen. Es kann zwar mehr als die obengenannte Menge eingesetzt werden, was jedoch keinen Vorteil bringt.

Die aktiven Wasserstoffatome besitzenden Verbindungen, welche beim erfindungsgemäßen Verfahren als Komponente b) verwendet werden, sind solche, welche bei den früher bekannten Verfahren zur

Polyurethan-Herstellung verwendet worden sind und wie sie z.B. im Kunststoffhandbuch Band VII, Polyurethane, Hansen-Verlag, München 1983, Seiten 42 - 62 oder in Houben-Weyl, Makromolekulare Stoffe, Band E20, Seiten 1595 - 1604 beschrieben werden.

Die erfindungsgemäß verwendeten Verbindungen mit NCO-Gruppen; Komponente a), sind die gleichen Verbindungen, welche bei bisher bekannten Verfahren eingesetzt wurden und wie sie z.B. im Kunststoffhandbuch, Band VII, Polyurethane, Hansen-Verlag, München 1983 oder in Houben-Weyl, Makromolekulare Stoffe, Band E20 beschrieben werden.

Bei dem erfindungsgemäßen Verfahren werden die substituierten Triamino(imino)phosphorane in der gleichen Art verwendet, wie man die früheren Katalysatoren eingesetzt hat, z.B. kann der Katalysator in seiner flüssigen Form für sich verwendet werden, oder durch Auflösen in einem Polyol oder einem passenden Lösungsmittel; er kann unter jeglichen Temperatur - oder anderen Bedingungen - entweder allein oder in Kombination anderer in der Technik bekannter Katalysatoren, welche als brauchbar zur Herstellung von Polyurethanen bekannt sind eingesetzt werden: beispielsweise organische oder anorganische Zinnverbindungen oder andere metallorganische Verbindungen; tertiären Aminen; Alkanolaminen, cyclischen Aminen; Polyaminen und dergleichen; Alkalimetallverbindungen und andere Co-Katalysatoren.

Das erfindungsgemäße Verfahren ist für die herkömmlichen Herstellungsmethoden, wie z.B. ONE-SHOT- oder Prepolymerverfahren zur Herstellung von Polyurethanschäumen, Polyurethanelastomeren, Polyurethanüberzügen und der gleichen geeignet, ebenso wie für die Vernetzungsreaktion, welche oft im Anschluß an die direkte Polyaddition erwünscht ist.

Alle anderen Bedingungen sind die gleichen wie bei herkömmlichen Urethanpolyadditionsverfahren. In jedem dieser Fälle können weitere Zusatzmittel, wie Kettenverlängerungsmittel, Treibmittel, Schaumstabilisatoren, Emulgatoren, Farben, Pigmente und Füllstoffe der an sich bekannten Art mitverwendet werden.

Die oben erwähnten erfindungsgemäßen Katalysatoren beschleunigen die Polyaddition in beträchtlichem Ausmaß und demnach ist die benötigte Katalysatormenge sehr gering. Da die erfindungsgemäßen Verbindungen nur einen geringen Geruch besitzen und da sie nicht flüchtige Flüssigkeiten oder Feststoffe darstellen, sind die erhaltenen Polyurethan-produkte frei von unerwünschten Gerüchen.

Die nachfolgenden Beispiele erläutern die Erfindung weiter, ohne sie zu beschränken. Teile und Verhältnisse sind in allen Fällen als Gewichtsteile gemeint.

## Beispiele

### Beispiel 1

In diesem Beispiel wird die katalytische Aktivität der erfindungsgemäßen Triamino(imino)phosphorane anhand von N,N′,N″-Hexamethyltriamino(methylimino)phosphoran, hergestellt nach dem im Text beschriebenen Verfahren, mit den unten angegebenen physikalischen Daten, in einem PUR-Kaltweichformschaumsystem gezeigt.

Kp (0,3 mm): 60 bis 62° C

| CHNP-Analyse: | ber. | gef. |
|---|---|---|
| C | 43,7 | 44,1 |
| H | 10,9 | 11,0 |
| N | 29,1 | 29,0 |
| P | 16,1 | 16,0 |

A-Komponente: 37,10 Teile eines Gemisches aus 2,4-Toluylendiisocyanat und 2,6-Toluylendiisocyanat im Verhältnis 80:20 und 4,4′-Diisocyanatodiphenylmethan mit polymeren Anteilen mit einem NCO-Gehalt von 44,5 ± 0,5 Gew.-%; Handelsprodukt der Bayer AG

B-Komponente:

100,00 Teile eines Polyetherpolyols der OH-Zahl 28 ± 2 mg KOH/g, hergestellt durch Umsetzung von Trimethylolpropan (TMP) mit Propylenoxid (PO) und anschließende Umsetzung mit Ethylenoxid (EO) mit einem PO/EO-Verhältnis von 82/18

3,00 Teile Wasser

0,05 Teile einer 70 %igen Lösung von Bis(2-dimethylaminoethyl)ether in Dipropylenglykol (DPG)

0,25 Teile einer 33 %igen Lösung von Diazabicyclo[2.2.2]octan (DABCO) in DPG
0,20 Teile Schaumstabilisator B 4617 der Fa. Goldschmidt AG
Teile des oben beschriebenen Triamino(imino)phosphorans

Die A-Komponente wird mit der B-Komponente vereinigt und mit einem Schnellrührer 10 sec. gründlich vermischt. Anschließend wird das Reaktionsgemisch bei Haumtemperatur in einer offenen Form verschäumt.

In Tabelle 1 sind die Ergebnisse bei verschiedenen Zugabemengen des Triamino(imino)phosphorans zusammengefaßt.

Tabelle 1

| x = | 0 | 0,2 | 0,4 | 0,6 | Tle. |
|---|---|---|---|---|---|
| Startzeit (sec) | 9 | 7 | 5 | 4 | |
| Abbindezeit (sec) | 135 | 60 | 48 | 40 | |
| Steigzeit (sec) = | 180 | 130 | 100 | 90 | |

Man erkennt deutlich die starke katalytische Wirkung des Katalysators.

Beispiel 2

In diesem Beispiel wird in einem PUR-Kaltweichformschaum die Aktivität der neuen Katalysatoren im Vergleich zum Diazabicyclo[2.2.2]octan (DABCO) dokumentiert.

Die Verarbeitung erfolgt wie in Beispiel 1.

Schaum 1 mit erfindungsgemäßem Katalysator aus Beispiel 1:

A-Komponente: 33,40 Teile des Isocyanates aus Beispiel 1
B-Komponente:
100,00 Teile des Polyols aus Beispiel 1
3,20 Teile Wasser
0,12 Teile einer 70 %igen Lösung von Bis(2-dimethylaminoethyl)ether in Dipropylenglykol (DPG)
0,10 Teile Schaumstabilisator aus Beispiel 1
0,30 Teile Katalysator aus Beispiel 1

Schaum 2 mit DABCO als Vergleich:

Es wird dieselbe Rezeptur wie in Schaum 1 verwendet, nur das der erfindungsgemäße Katalysator durch 0,5 Teile einer 33 %igen Lösung von DABCO in Dipropylenglykol ersetzt wird.

Sowohl Schaum 1 als auch Vergleichsschaum 2 sind offenzellig und hochelastisch; die Poren sind normal groß. In Tabelle 2 sind die Start-, Abbinde- und Steigzeiten vergleichend zusammengefaßt.

Tabelle 2

| | Schaum 1 | Vergleichsschaum 2 |
|---|---|---|
| Startzeit | 5 sec | 5 sec |
| Abbindezeit | 50 sec | 50 sec |
| Steigzeit | 85 sec | 85 sec |

Dieses Beispiel zeigt, daß die erfindungsgemaßen Katalysatoren mindestens ebenso aktiv wie DABCO sind.

Beispiel 3

In diesem Beispiel wird die katalytische Wirkung der erfindungsgemäßen Verbindungen in einem aliphatischen Weichschaum gezeigt:
A-Komponente: 41 Teile Isophorondiisocyanat, das mit einem Polyetherpolyol der OH-Zahl 670, hergestellt durch Propoxylierung von Glycerin, zu einem Semiprepolymeren mit einem NCO-Gehalt von 29 Gew.-% vorreagieren gelassen wird.
B-Komponente:
80,00 Teile eines Polyetherpolyols der OH-Zahl 26 mg KOH/g, hergestellt durch Umsetzung von Trimethylolpropan mit Propylenoxid (PO) und anschließender Umsetzung mit Ethylenoxid (EO) mit einem PO/EO-Verhältnis von 78/22 7,00 Teile Ethylenglykol
0,50 Teile Dibutylzinndilaurat
5,00 Teile Trichlorfluormethan
0,50 Teile Katalysator aus Beispiel 1
Die Verarbeitung erfolgt wie in Beispiel 1.
Die Startzeit des Systems beträgt 10 sec., die Steigzeit beträgt 2 Min.

Beispiel 4

In diesem Beispiel wird die katalytische Aktivität eines weiteren Vertreters aus der Reihe der Triamino-(imino)phosphorane in einem Weichschaumsystem gezeigt.
Eingesetzt wird 2-t-Butylimino-2-diethylamino-1,3-dimethyl-perhydro-1,3,2-diazaphosphorin, hergestellt nach dem im Text beschriebenen Verfahren.
Reinheit laut GC >98 %
Kp (0,03 Torr) : 72° C
A-Komponente: 18 Teile einer Mischung aus 2,4-Toluylendiisocyanat und 2,6-Toluylendiisocyanat im Verhältnis 80:20
B-Komponente:
50,00 Teile eines Polyetherpolyols der OH-Zahl 35 mg KOH/g, hergestellt durch Umsetzung von Trimethylolpropan mit Propylenoxid (PO) und anschließender Umsetzung mit Ethylenoxid (EO) mit einem PO/EO-Verhältnis von 86,55/13,45
1,50 Teile Wasser
0,50 Teile eines Polyetherpolysiloxans als Stabilisator; Stabilisator OS 50 der Fa. Bayer AG
0,30 Teile des oben beschriebenen Triamino(imino)phosphorans
Die B-Komponente wird bei Haumtemperatur gelagert und nach verschiedenen Lagerzeiten unter Zusatz von 0,05 Teilen Zinn(II)octoat wie in Beispiel 1 beschrieben verarbeitet.

| | Startzeit | Steigzeit |
|---|---|---|
| Vergleich (0 Tage) | 6 sec. | 105 sec. |
| Lagerzeit: | | |
| 1 Tag | 6 sec. | 101 sec. |
| 8 Tage | 6 sec. | 103 sec. |
| 20 Tage | 7 sec. | 104 sec. |

Man sieht, daß selbst dreiwöchige Lagerung der wasserhaltigen B-Komponente keinen Einfluß auf die katalytische Aktivität des erfindungsgemäßen Katalysators hat.

Beispiel 5

In diesem Beispiel wird die Hydrolysefestigkeit der neuen Katalysatoren im Vergleich zu 1,8-Diazabicyclo[5.4.0]undecen-7 (DBU) gezeigt.
Angesetzt wurden folgende wäßrigen Lösungen:
Lösung 1:

0,3 Teile Katalysator aus Beispiel 1 in 1,5 Teilen Wasser
Lösung 2:
0,3 Teile Katalysator aus Beispiel 4 in 1,5 Teilen Wasser
Lösung 3:
0,3 Teile DBU in 1,5 Teilen Wasser A-Komponente: 18 Teile des Isocyanats aus Beispiel 4
B-Komponente:
50,00 Teile des in Beispiel 5 beschriebenen Polyols
0,50 Teile des Stabilisators aus Beispiel 5
0,05 Teile Zinn(II)octoat
1,80 Teile der Lösung 1, 2 oder 3

Nach verschiedenen Lagerzeiten der wäßrigen Lösungen wurden folgende Ergebnisse erhalten:

| | Startzeit | Steigzeit |
|---|---|---|
| Vergleich ohne Lagerung | | |
| Lösung 1 | 5 sec. | 70 sec. |
| Lösung 2 | 6 sec. | 105 sec. |
| Lösung 3 | 10 sec. | 90 sec. |
| nach 4 Tagen | | |
| Lösung 1 | 6 sec. | 105 sec. |
| Lösung 2 | 6 sec. | 108 sec. |
| Lösung 3 | 12 sec. | 195 sec. |
| nach 18 Tagen | | |
| Lösung 1 | 6 sec. | 105 sec. |
| Lösung 2 | 6 sec. | 105 sec. |
| Lösung 3 | 23 sec. | 210 sec. |

Man erkennt im Gegensatz zu den erfindungsgemäßen Katalysatoren den starken Abfall der katalytischen Aktivität des DBU in wäßriger Lösung.

## Ansprüche

1. Verfahren zur Herstellung von gegebenenfalls zellförmigen Kunststoffen nach dem Polyisocyanatpolyadditionsverfahren durch Umsetzung von
a) Polyisocyanaten mit
b) höhermolekularen Verbindungen mit mindestens zwei gegenüber Isocyanaten reaktionsfähigen Wasserstoffatomen, unter Verwendung von
c) Katalysatoren sowie gegebenenfalls
d) Kettenverlängerungsmitteln und
e) weiteren an sich bekannten Zusatzmitteln,
dadurch gekennzeichnet, daß man als Katalysatoren c) ein oder mehrere Triamino(imino)phosphorane der allgemeinen Formeln

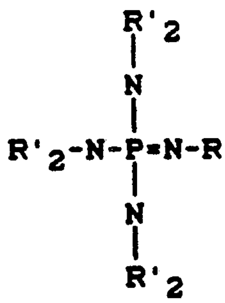
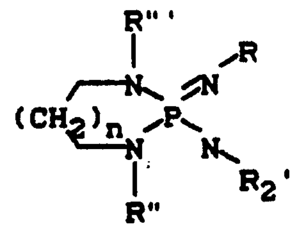
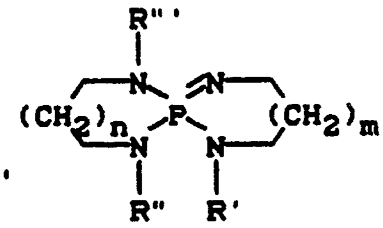

I II III

worin die Gruppen
R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Arylgruppen oder Alkylarylgruppen,
R' lineare oder verzweigte Alkylgruppen mit 1 bis 8 Kohlenstoffatomen, Cycloalkyl- oder Alkylcycloalkylgruppen mit 5 bis 9 Kohlenstoffatomen, Cycloalkylengruppen mit 4 bis 6 Kohlenstoffatomen,
R'' Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Arylgruppen oder Alkylarylgruppen,
R''' lineare oder verzweigte Alkylgruppen mit 1 bis 8 Kohlenstoffatomen, Cycloalkyl- oder Alkylcycloalkylgruppen mit 5 bis 9 Kohlenstoffatomen, Arylgruppen oder Alkylarylgruppen bedeuten - und
die ganzen Zahlen n und m gleich oder verschieden sind und für 0 bis 2 stehen,
gegebenenfalls zusammen mit weiteren an sich bekannten Katalysatoren einsetzt.

2. Verbindungen der allgemeinen Formel II, worin die Gruppen
R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
R' lineare oder verzweigte Alkylgruppen mit 1 bis 8 Kohlenstoffatomen, Cycloalkyl- oder Alkylcycloalkylgruppen mit 5 bis 9 Kohlenstoffatomen oder Cycloalkylengruppen mit 4 bis 6 Kohlenstoffatomen,
R'' Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
R''' lineare oder verzweigte Alkylgruppen mit 2 bis 8 Kohlenstoffatomen, Cycloalkyl- oder Alkylcycloalkylgruppen, Aryl- oder Alkylarylgruppen bedeuten und
n eine ganze Zahl von 0 bis 2 bedeutet.

3. Verbindungen der allgemeinen Formel II, worin die Gruppen
R Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
R' eine Methylgruppe oder verzweigte Alkylgruppen mit 3 bis 8 Kohlenstoffatomen, Cycloalkyl-oder Alkylcycloalkylgruppen mit 5 bis 9 Kohlenstoffatomen oder Cycloalkylengruppen mit 4 bis 6 Kohlenstoffatomen,
R'' Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Alkylarylgruppen,
R''' lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl-oder Alkylarylgruppen bedeuten und
n eine ganze Zahl von 0 bis 2 bedeutet.

4. Verbindungen der allgemeinen Formel III, worin die Gruppen
R Wasserstoff, lineare oder verzweigte Alkylgruppen mit 2 bis 8 Kohlenstoffatomen, Cycloalkyl- oder Alkylcycloalkylgruppen mit 5 bis 9 Kohlenstoffatomen, Aryl- oder Alkylarylgruppen,
R' lineare oder verzweigte Alkylgruppen mit 1 bis 8 Kohlenstoffatomen, Cycloalkyl- oder Alkylcycloalkylgruppen mit 5 bis 9 Kohlenstoffatomen oder Cycloalkylengruppen mit 4 bis 6 Kohlenstoffatomen,
R'' Wasserstoff, lineare oder verzweigte Alkylgruppen mit 1 bis 8 Kohlenstoffatomen, Cycloalkyl- oder Alkylcycloalkylgruppen mit 5 bis 9 Kohlenstoffatomen, Aryl- oder Arylgruppen bedeuten und
die ganzen Zahlen n und m gleich oder verschieden sind und für 0 bis 2 stehen.